# EUROPEAN PATENT SPECIFICATION

(11) **EP 2 699 031 B1**
(45) Date of publication and mention of the grant of the patent: **04.05.2016**
(21) Application number: 12180346.4
(22) Date of filing: 13.08.2012
(51) Int. Cl.: H04W 4/20, H04L 29/08

(54) **TARGETED CONTENT STREAMING BANNERS**
Streaming-Banner mit gezieltem Inhalt
Bannières de diffusion en continu de contenu ciblé

(43) Date of publication of application: 19.02.2014
(73) Proprietor: BlackBerry Limited, Waterloo, ON N2K 0A7 (CA)
(72) Inventor: Radar, Olivier, Waterloo, Ontario N2L 3W8 (CA)
(74) Representative: Moore, Barry

(56) References cited:
- WO-A1-2009/020973
- US-A1- 2009 199 114
- US-A1- 2009 222 348
- US-A1- 2010 269 040
- US-A1- 2011 264 736
- US-A1- 2011 288 917

## Description

The present disclosure relates generally to providing recommendations or advertisement. More particularly, the present disclosure relates to providing recommendations and advertisement on mobile devices.

### BACKGROUND

One reason for popularity of mobile devices, such as smartphones, is due to the widespread availability of specialized applications (hereinafter referred to as "apps") operable on such devices. Each app caters to a specific interest or need, such as a game or serving coupons to a user based on location. It is not uncommon for an electronic storefront selling apps (also referred to as an app store) to offer upwards of tens to hundreds of thousands of apps for purchase and download. With such a large app library, however, comes difficulty in identifying apps of interest.

A particular app may come to a user's attention by word-of-mouth. The user may search the app library by keyword(s), category, highest customer reviews, top downloads, or other parameters to find an app suitable for the user's needs or interest. Alternatively the user may accidently find out about a particular app while doing some other task. Even when a particular app is known by the user, the user still has to take active steps to engage the app store, login, pay (if applicable), and download/activate/receive the app on his or her mobile device(s).

Thus, it would be beneficial to provide a mechanism that automatically notifies a user of specific apps that are likely to be of interest to that user. It would also be beneficial to identify apps to the user in a manner that the user is likely to view and engage. It would further be beneficial to provide integrated functionality to increase the likelihood of acquiring (rights to) an app in response to a recommendation.

US 2011/288917 is directed towards methods and systems for displaying advertising or other promotional information to users via mobile devices. In particular, methods and systems that target advertisements using real-time information including location-based, defined geolocation territory rights (e.g., GeoEstate rights) and weather-related information.

US 2009/199114 is directed towards a mobile communication device having many more possible workflows that could be followed given the available functions of that device. These may include, but are not limited to, "click to call", "click to locate", "click to SMS", "click to send a picture", "click to handle later", and can be constrained only by the available and accessible functionality of the user's device. A list of actions to be made available associated with an advertisement are provided along with an iconic visual representation of those actions for the user to identify what the resultant workflow will be if they activate the action.

WO 2009/020973 is directed to selecting a web advertisement based on caller identifier information.

US 2010/269040 discusses a method of controlling a mobile terminal is presented. The method includes detecting a first touch on the mobile terminal for a predetermined time when the mobile terminal is in a locked state, simultaneously displaying a locking icon and an unlocking icon in response to the detected first touch, and detecting a second touch on the locking icon or the unlocking icon.

US 2009/222348 discusses systems and methods for providing online promotions integrated with social network-based platforms are disclosed. Promotion details such as rules, offered prizes, incentives and descriptions, survey questions, display banners, terms and conditions, privacy policy, and social networks to integrate the promotion with, are provided by the sponsoring organization to a server.

US 2011/264736 discusses a system where, based on the instruction in the received markup language document, the user device requests personalized content from the social networking system, which generates the requested personalized content based on social information about the user. The user device then renders the web page with the personalized content contained in a frame and displays the rendered web page and the frame to the user.

### BRIEF DESCRIPTION OF THE DRAWINGS

Some embodiments are illustrated by way of example and not limitations in the figures of the accompanying drawings, in which:
FIG. 1 illustrates an example system for providing targeted content streaming banners according to some embodiments.
FIG. 2 illustrates example components included in one or more servers and databases of FIG. 1 to implement the operations and functionalities of FIG. 3 according to some embodiments.
FIG. 3 illustrates an example flow diagram for providing targeted content streaming banners according to some embodiments.
FIG. 4 illustrates an example flow diagram showing operations and functionalities performed by a mobile device associated with providing a streaming banner to the user according to some embodiments.
FIGs. 5A-5D illustrate example screen views showing the streaming banner according to some embodiments.
FIG. 6 shows a diagrammatic representation of a machine in the example form of a computer system within which a set of instructions are executed to cause the machine to perform any one or more of the methodologies of FIGs. 2-4 according to some embodiments.

The headings provided herein are for convenience only and do not necessarily affect the scope or meaning of the terms used. Like reference numerals in the drawings denote like elements.

### DETAILED DESCRIPTION

Described in detail below is an apparatus and method for determining and providing streaming banners including information about one or more items/content for display on mobile communication devices. The items/content featured in each streaming banner is targeted for the user of a given mobile communication device. Selection of the specific items/content is based on information relating to the user including, but not limited to, user profile preferences, user profiles of other users that are similar to the user's user profile, latest user activity on the mobile communication device, behaviors of the user's friends or those in the user's social network, and the like. The streaming banner includes actionable items corresponding to each item/content featured. When the user actuates (or otherwise expresses interest) an actionable item corresponding to a particular item/content, then a page associated with the given actionable item is displayed on the mobile communication device for the user to learn more about the item/content or make a purchase.

Various modifications to the embodiments will be readily apparent to those skilled in the art, and the generic principles defined herein may be applied to other embodiments and applications without departing from the scope of the invention. Moreover, in the following description, numerous details are set forth for the purpose of explanation. However, one of ordinary skill in the art will realize that embodiments of the invention may be practiced without the use of these specific details. In other instances, well-known structures and processes are not shown in block diagram form in order not to obscure the description of the invention with unnecessary detail. Thus, the present disclosure is not intended to be limited to the embodiments shown, but is to be accorded the widest scope consistent with the principles and features disclosed herein.

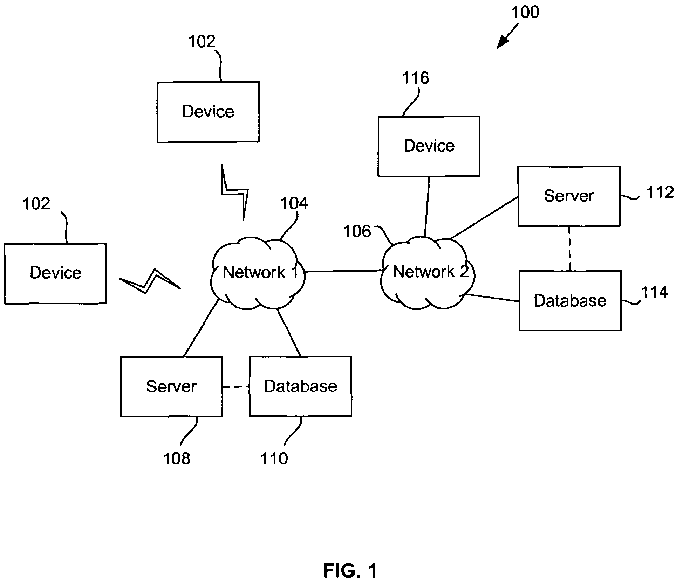

FIG. 1 illustrates an example system 100 for providing targeted content streaming banners according to some embodiments. The system 100 includes a plurality of mobile devices 102, a first network 104, a second network 106, a first server 108, a first database 110, a second server 112, a second database 114, and one or more devices 116.

Each of the plurality of mobile devices 102 comprises a mobile communication device capable of wireless communication with the first network 104. Each of the mobile devices 102 comprises a computer or computing device, including but not limited to, a cellular or mobile phone, smart phone, tablet, portable digital assistant (PDA), Internet appliance, hand-held device, wireless device, portable device, laptop, netbook, ultrabook, wearable computers, multi-processor systems, microprocessor-based or programmable consumer electronics, mini-computers, and the like. In some embodiments, each of the mobile devices 102 includes, but is not limited to, an input sensor (e.g., camera, bar code reader, machine readable information reader, physical keyboard, virtual keyboard provided using software on a touch screen), transceiver, storage unit, display (e.g., touch screen), one or more input mechanisms (e.g., keyboard, trackball, trackpad, touch screen), and a processor. The processor is in communication with and configured to coordinate control of each of the input sensor, transceiver, storage unit, display, and input mechanisms. The mobile device 102 further includes one or more applications such as, but not limited to, a web browser, messaging application, and one or more apps acquired from an application store or library, and interface and communication capabilities to communicate with one or more components within the system 100. Mobile devices 102 can be geographically distributed from each other.

Device 116 is configured for wired and/or wireless (not shown) communication with the second network 106. Device 116 is otherwise similar to mobile devices 102. Although a single device 116 is depicted in FIG. 1, it is understood that a plurality of devices can communicate with the second network 106. Each of the mobile devices 102 and device 116 may also be referred to as a mobile device or a mobile communication device.

First network 104 (also referred to as network 1) comprises a wireless communications network such as, but not limited to, a cellular network, WiFi network, WiMax network, wireless local area network (WLAN), wireless wide area network (WWAN), wireless metropolitan area network (WMAN), wireless virtual private network (WVPN), an ad hoc network, or a combination of two or more such networks. When first network 104 comprises a public network, security features (e.g., VPN/SSL secure transport) may be included to ensure authorized access within the system 100.

Second network 106 (also referred to a network 2) comprises another communications network such as, but not limited to, a local area network (LAN), a wireless LAN (WLAN), a wide area network (WAN), a wireless WAN (WWAN), a metropolitan area network (MAN), a wireless MAN, a WiFi network, a WiMax network, an ad hoc network, an intranet, an extranet, a virtual private network (VPN), a portion of the Internet, the Internet, a portion of a public switched telephone network (PSTN), a cellular network, or a combination of two or more such networks. When second network 106 comprises a public network, security features (e.g., VPN/SSL secure transport) may be included to ensure authorized access within system 100. First and second networks 104, 106 are operably connected to each other.

Certain devices directly access first network 104 but not the second network 106 and vice versa. For example, the mobile devices 102 have direct access to the first network 104 but not necessarily a direct access to the second network 106. Conversely, the device 116 has direct access to the second network 106 but not the first network 104. In order to facilitate communication between networks 104 and 106, each of the networks 104, 106 includes servers, databases, switches, routers, base stations, repeaters, software, firmware, intermediating servers, and/or other components (not shown) to facilitate communication between components with access to the first network 104 (e.g., mobile devices 102, server 108, database 110) and components with access to the second network 106 (e.g., device 116, server 112, database 114). In one embodiment, the first network 104 comprises a cellular network and the second network 106 comprises the Internet.

Server 108 comprises one or more computers or processors configured to communicate with the mobile devices 102 and/or database 110 via the first network 104. Server 112 comprises one or more computers or processors configured to communicate with the device 116 and/or database 114 via the second network 106. Each of the server 108 and server 112 is configured to host one or more applications accessed by the mobile devices 102, 116; to provide processing functionalities for the mobile devices 102, 116; to provide data, content, images, audio, video, etc. to the mobile devices 102, 116; to track and monitor activities associated with the mobile devices 102, 116; and/or facilitate access to and store information in the databases 1110, 114. Each of server 108 and server 112 includes one or more of, for example, one or more web servers hosting e-commerce sites, one or more messaging servers (e.g., instant messaging (IM), short message service (SMS), text messaging, Blackberry Messenger, electronic mail (email), push messaging, and the like), one or more servers to track and gather user activity and preferences, one or more servers to provide recommendations, one or more servers hosting an app store, one or more payment infrastructure servers, and the like. More than one server can be associated with each of the first and second networks 104, 106.

Each of database 110 and database 114 comprises one or more storage devices configured to store data and/or instructions for use by server 108, server 112, mobile devices 102, and/or device 116. The content of database 110 is accessed via the first network 104 or directly by the server 108. The content of database 114 is accessed via the second network 106 or directly by the server 112. The content of each of databases 110, 114 includes, but is not limited to, user profiles, social graphs, device information, social graphs, user preferences, app library, advertisements, music library, video library, image library, and the like. Database 110 and database 114 may be located at one or more geographically distributed locations from each other and also from the servers 108, 112. Alternatively, one or more of databases 110, 114 may be included within respective servers 108, 112.

Alternatively, although the first network 104 and second network 106 are shown as two networks, the two networks can be implemented together as a single network configured to support both wireless and wired communications. In this configuration, servers 108, 112 can be combined together and databases 110, 114 can also be combined together.

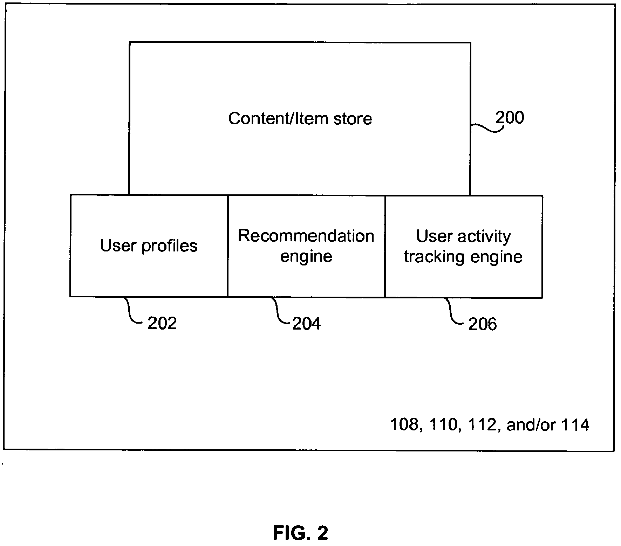

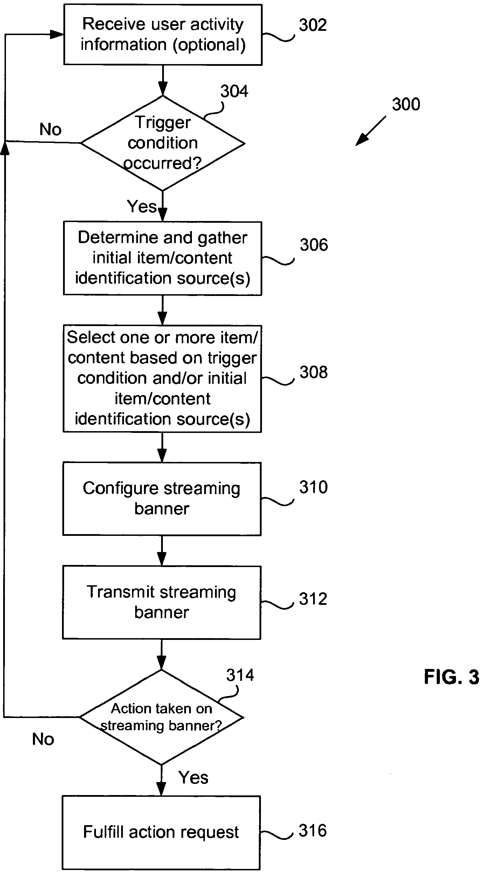

FIG. 2 illustrates example components included in the server 108, database 110, server 112, and/or database 114 to implement the operations and functionalities of FIG. 3 according to some embodiments. FIG. 3 illustrates an example flow diagram 300 for providing targeted content streaming banners according to some embodiments. FIGs. 2 and 3 are discussed below in conjunction with each other. Although the discussion below is associated with providing streaming banners including app information, it is understood that other information can be similarly included in streaming banners. Music, video, digital media, product, and/or service information are other content/item type information that can be provided in streaming banners. It is also understood that while mobile devices 102 are discussed below with respect to streaming banners, similar operations can occur using device 116.

The components of FIG. 2 are representative of data and code base or instructions (software components, applications, apps, modules, application programming interfaces (APIs), and the like) configured to be accessed or executed by one or more processors included in the server 108, database 110, server 112, and/or database 114. FIG. 2 includes a content store/provider component 200, a user profiles component 202, a recommendation engine component 204, and a user activity tracking engine component 206. One or more of the components can be located geographically distributed from each other. The user profiles component 202 may be located, for example, in database 110 while the recommendation engine component 204 is located in server 108.

As described in detail below, the recommendation engine component 204 (also referred to as a recommendation engine) uses the data from at least the user profiles component 202 and the user activity tracking engine component 206 to determine and provide recommendations such as streaming banners advertising apps displayed on a display of mobile devices 102. The recommendation engine component 204 interfaces with the content store component 200 to formulate recommendations likely to drive traffic to specific content available at the content store component 200. The content store component 200 comprises a virtual storefront or repository that offers a plurality of content (e.g., apps, music, video, images, digital media), products, services, and other items/content available for purchase or access. Digital content can also be downloaded from the content store component 200, including automatic push to the user's mobile device(s) 102, upon completion of the purchase or access process. The content store component 200 can comprise a destination or service directly provided by the first network 104 (e.g., cellular network provider), a destination or service directly provided by the device manufacturer or an operating environment associated with the device (e.g., Blackberry App World ®), an online website, a third party provided destination or service, and variants thereof. The content store component 200 is also referred to as an electronic commerce (e-commerce) store, e-commerce storefront, online items/content site, application or app e-commerce store, application or app e-commerce site, and the like. Although components 200-206 are shown as distinct components in FIG. 2, it should be understood that components 200-206 may be implemented as fewer or more components than illustrated. It should also be understood that any of components 200-206 may communicate with one or more components included in the system 100, such as server 108, database 110, server 112, database 114, mobile devices 102, or device 116.

In some embodiments, each of the mobile devices 102 receiving recommendations from the recommendation engine component 204 has installed a device client component (e.g., cookies, widget, modules, apps) that facilitates tracking user actions/activity on the mobile device 102, communicating tracked user action/activity to the user activity tracking engine 206, properly displaying received recommendations from the recommendation engine 204, and other such activities. In other embodiments, the device client component installation is optional or it not required for the recommendation engine component 204 to provide relevant recommendations to the mobile devices 102, 116.

FIG. 3 illustrates an example flow diagram 300 for providing targeted recommendations to mobile devices 102, in particular, streaming banners promoting targeted apps, according to some embodiments. At a block 302, the user activity tracking engine component 206 receives user activity information on a given mobile device 102. The user activity information is periodically provided, by the user's mobile device 102 automatically in response to occurrence of a certain action, in response to a request by the user activity tracking engine component 206, and/or forwarded by the network provider in the course of the network provider fulfilling device requests. User activity information comprises information corresponding to the user actions on the user's mobile device 102 including, but is not limited to: geo-location information associated with the current location of the user's mobile device 102, use of a particular app, product or service purchases, digital media purchases (e.g., songs, movies, television shows), songs played on the mobile device 102, online search terms, online websites visited, apps downloaded on the mobile device 102, subject matter of messages sent and received on the mobile device 102, user unlocking the mobile device 102, and a variety of other activities or actions taken on the mobile device 102.

Next at a block 304, the recommendation engine component 204 checks whether a trigger condition(s) is met to provide or update a streaming banner to a given device. Determining satisfaction of the trigger condition(s) is based on the user activity information received at block 304 or it can be system triggered independent of user activity. In the latter case, block 302 may be optional. Examples of triggering conditions include, but are not limited to, the mobile device 102 being in proximity to a sponsor retailer, the mobile device 102 being in proximity of a product (detected via near field communication (NFC)), time limit reached for the existing streaming banner displayed on the mobile device 102, a new app available on the content store, other user(s) having a similar user profile to a given user has downloaded a particular app, other user(s) in the same social network as a given user has downloaded a particular app, other user(s) having similar user profiles to or are in the same social network as the given user is using a particular app, an app available on the content store matches the given user's profile preference (e.g., user just changed his profile preference indicating that he likes games and productivity apps but not reading apps), the given user is searching for apps via a web browser or in the content store, and the like. The recommendation engine component 204 may access data or otherwise coordinate with the user profiles component 202 and/or user activity tracking engine component 206 to check for the trigger condition(s).

If the trigger condition is not met (no branch of block 304), then flow diagram 300 returns to block 302 to receive additional user activity information and/or to wait for a trigger condition to occur. Otherwise the trigger condition is satisfied (yes branch of block 304) and the recommendation engine component 204 proceeds to determine and gather recommendation data mining source(s) at a block 306. For example, if a streaming banner is to promote one or more apps based on apps that other users with similar profiles downloaded, then the recommendation engine component 204 determines which user profile parameters are of interest and the requisite similarity threshold. The recommendation engine component 204 also interfaces with the user profiles component 202 to obtain the user profiles. There may be one or more sets of user profiles, each maintained by a different entity. For example, separate user profiles can be maintained by a device manufacturer, a network provider, and the content store component 200. The network provider's user profiles may include more data about app usage on the devices, while the content store's user profiles may include which apps were downloaded for which user accounts but limited information about actual app usage on the respective mobile devices 102. The user profile parameters of interest may comprise non-app specific data, such as age, profession, household income, product purchase history (e.g., shoes, electronics), and the like.

As another example, if a streaming banner is to be configured based on apps that a user's friend has on his/her mobile device (which could be another one of the mobile devices 102), then the recommendation engine component 204 accesses or generates a social graph associated with the user. The social graph specifies the user's friends and/or their profiles, or at least provides login or identifier type of information to access social media site(s) to look-up who the user's contacts are and their activities or interests. The social media site may reveal, for example, that one of the user's contacts (e.g., a friend) is discussing a particular app (or song or other items to recommend) that the user doesn't have on his/her mobile device 102. Alternatively, the social media site(s) are used to identify the user's contacts, and then look-up those contacts' user profiles via the user profiles component 202 to determine which apps they have installed on their mobile devices that are not on the user's mobile device 102.

As still another example, a streaming banner may be populated with new apps or apps selected for promotion by the content store component 200. As another example, the streaming banner is populated by apps matching user profile preferences - expressly specified by the user (e.g., user specified an interest in word games during account setup) and/or based on user activity (e.g., user downloads word game apps).

Next at a block 308, the recommendation engine component 204 is configured to select one or more specific items/content (e.g., apps, music, video, digital media, product, service, etc.) from an items/content library or catalog to be promoted in the streaming banner. The selection is made in accordance with the trigger condition and/or the recommendation data mining sources (also referred to as initial/provisional content identification source(s)) gathered in block 308. If the streaming banner includes information about more than one item/content, then each of those items/content can be selected based on different criteria relative to each other. In the case of the items/content comprising apps, for example, one or more specific apps is selected as follows to be announced, promoted, recommended, marketed, offered for sale, or otherwise included in the streaming banner: (1) select app(s) downloaded by other users having user profiles similar to the user profile of a user of the given mobile device 102, (2) select app(s) identified/downloaded by the user's contacts/friends or those in the user's social network, (3) select app(s) matching user profile preferences or latest user activity, and/or (4) select app(s) that are already designated by an items/content store (e.g., new apps, sponsored apps, randomly selected apps of the day).

The selected content either matches exactly the content identified by others or matches some aspect of the content identified by others. For example, the selected content may exactly match the content purchased by others having user profiles similar to the user's profile. Conversely, the selected content may match the subject matter category, price, or other aspect of the content specified by other users but not necessarily be identical to the content specified by others. If the selected content is based on system set considerations, then user activities and interests may or may not be taken into account in the selection of the content. The content store may promote a new app to all of the mobile devices 102 based on its newness alone, or target the new app only to those users that have shown a preference for the same type of apps as the new app.

The recommendation engine component 204 at a block 310 configures a streaming banner using the selected content. Configuration includes formatting appropriate for the user's mobile device 102's screen parameters; generating/gathering graphics, text, icons, hyperlinks, actionable items, and other visual information associated with the selected content; and generating instructions to the given mobile device 102 associated with the streaming banner such as setting a time period for display or persistence across different screen pages. Streaming banners are also referred to as in-stream advertisement, in-stream ads, streamer advertisement, steamer ads, streamers, animated banners, animated banner ads, and similar variants.

Next the streaming banner is transmitted to the user's mobile device 102 at a block 312. If the user takes action on the streaming banner displaying on his/her mobile device 102 (yes branch of block 314), then the appropriate server 108, 112 responds to fulfill the action request at a block 316. If the user does not take any action on the streaming banner (e.g., user expresses no interest in the streaming banner) (no branch of block 314), then flow diagram 30 returns to block 302 to await user activity information. User action includes, but is not limited to, clicking, tapping, swiping, or other expression of interest in (or actuation of) an actionable portion of the streaming banner associated with a specific content. For example, tapping on a graphic of a specific app included in the streaming banner causes the user's mobile device 102 to display a detailed information, download, and/or purchase page for the specific app at the content store component 200. The user may additionally be automatically logged into the content store (e.g., an e-commerce site or web storefront) to facilitate obtaining the specific app.

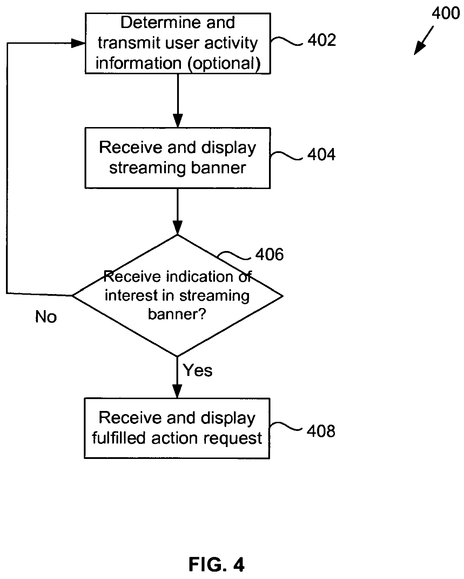

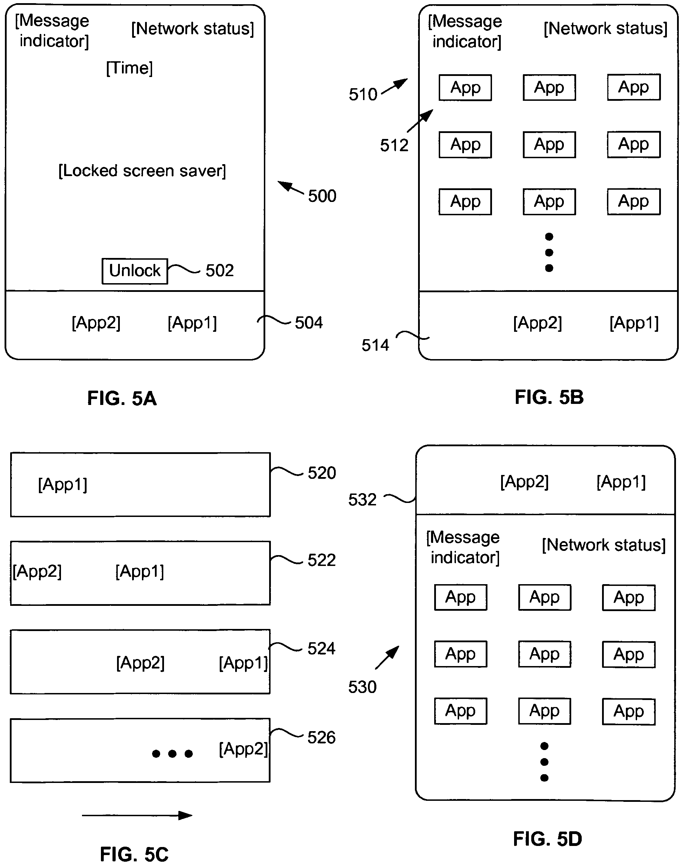

FIG. 4 illustrates an example flow diagram 400 showing operations and functionalities performed by each of the mobile devices 102 associated with providing a streaming banner to each user of the respective mobile devices 102 according to some embodiments. FIGs. 5A-5D illustrate example screen views displayed on a display of a given mobile device 102 showing the streaming banner according to example embodiments. FIGs. 4 and 5A-5D are discussed below in conjunction with each other.

At a block 402, the mobile device 102 transmits user activity information for receipt by the user activity tracking engine component 206. The tracking, gathering, and transmission of the user activity information can be controlled by the device client installed on the mobile device 102. The receipt of the user activity information is discussed above with respect to block 302 of FIG. 3. And as discussed for block 302, block 402 is optional when a streaming banner is triggered without use of user activity information.

Next at a block 404, the mobile device 102 receives and displays the streaming banner provided by the server 108 or 112 on a display/screen included in the mobile device 102. An example pathway comprises the streaming banner from the server 108 received by one or more of mobile devices 102 via the first network 104. Another example pathway comprises the streaming banner from the server 112 being received by one or more of mobile devices 102 via the second network 106 and the first network 104. In one embodiment, the streaming banner is provided on the bottom portion of the screen, and is included in the locked and unlocked home pages/screen. Text, graphic, icon, hyperlink, actionable item/indicator, and other presentation material associated with each content being promoted/marketed in the streaming banner is presented as animated elements, such as scrolling from left to right (or right to left), blinking, changing colors, or the like. Content represented in the streaming banner can be the same (e.g., all apps) or of dissimilar types to each other (e.g., an app, a song, and headphones). Content represented in a streaming banner includes, but is not limited to, one or more of a song, a video, a product, a digital media, a service, and an app.

FIG. 5A shows an example locked home page or screen 500 including indication that the device is locked, an unlock icon 502, and a streaming banner 504. The streaming banner 504 is configured to promote, market, recommend, or notify at least first and second apps (App1 and App2), which are shown scrolling or streaming from left to right. FIG. 5B shows an example unlocked home page or screen 510 that includes home page information, such as a plurality of app icons 512, and a streaming banner 514. The streaming banners 504 and 514 may be the same streaming banner. A streaming banner is displayed while the mobile device 102 is locked (e.g., streaming banner 504) and the streaming banner persists on the home page after the mobile device 102 is unlocked (e.g., streaming banner 514).

FIG. 5C shows an example time series of streaming banners displaying content progressing from left to right. Streaming banner 520 shows text, graphic, icon, hyperlink, actionable item/indicator, and other presentation material associated with App1 (collectively referred to as App1 information) displaying on the left side of the banner. Streaming banner 522 is displayed at a later point in time relative to streaming banner 520, shows the App1 information moved to the right relative to streaming banner 520. The text, graphic, icon, hyperlink, actionable item/indicator, and other presentation material associated with App2 (collectively referred to as App2 information) also starts displaying on the left side of streaming banner 522. Streaming banner 524 is displayed at a later point in time relative to streaming banner 522, shows the App1 information moved all the way to the right side and the App2 information correspondingly progressing rightward. Streaming banner 526 is displayed at a later point in time relative to streaming banner 524, and no longer shows the App1 information because it has moved off the banner. Instead, the App2 information has moved to the rightmost position on the streaming banner 526. The streaming or scrolling of the App1 information, App2 information and other content information can be on a continuous loop in the streaming banner.

In other embodiments, the streaming banner can be positioned at one or more other pre-defined locations on the screen. FIG. 5D shows an example screen 530 including a streaming banner 532 provided at a top portion of the screen. The streaming banner can be displayed in one or more apps (e.g., web browser, downloaded apps) in addition to or as an alternative to the locked and unlocked home pages/screens. A streaming banner can display on a mobile device 102 at all times with the content changing in accordance with trigger conditions. In some example embodiments, a streaming banner 532 can be non-persistent, displaying periodically, for a set period of time, or sporadically based on specific user activity.

Once a streaming banner is presented on the mobile device 102, the mobile device 102 monitors whether the user indicates interest in the content included in the streaming banner at a block 406. The user indicates interest by taking action on the content information associated with a specific content displayed in the streaming banner. Additional details regarding user action on the streaming banner is described above with respect to block 314 of FIG. 3. If the user takes no action with respect to the banner (no branch of block 406), then flow diagram 400 returns to block 402. Otherwise the user expresses interest in specific content presented in the streaming banner (yes branch of block 406), and the given mobile device 102 receives and displays the fulfilled action request at a block 408. Additional details regarding the response to the user action on the banner is described above with respect to block 316 of FIG. 3.

In this manner, determination and configuration of streaming banners including information about one or more items/content are disclosed herein. The streaming banner displayed on a pre-determined portion of a screen of a mobile device 102 serves informational as well as commercial purposes. Provision of a streaming banner for a given mobile device 102 is triggered by either a user activity on the mobile device 102 and/or a system set condition. In response to the trigger, each of the items/content represented in the streaming banner is selected in accordance with the trigger condition and/or initial item/content identification source(s). In the case of the items/content comprising apps, one or more specific apps is selected as follows to be announced, promoted, recommended, marketed, offered for sale, or otherwise included in the streaming banner: (1) select app(s) downloaded by other users having user profiles similar to the user profile of a user of the given mobile device 102, (2) select app(s) identified/downloaded by the user's contacts/friends or those in the user's social network, (3) select app(s) matching user profile preferences or latest user activity, and/or (4) select app(s) that are already designated by an items/content store (e.g., new apps).

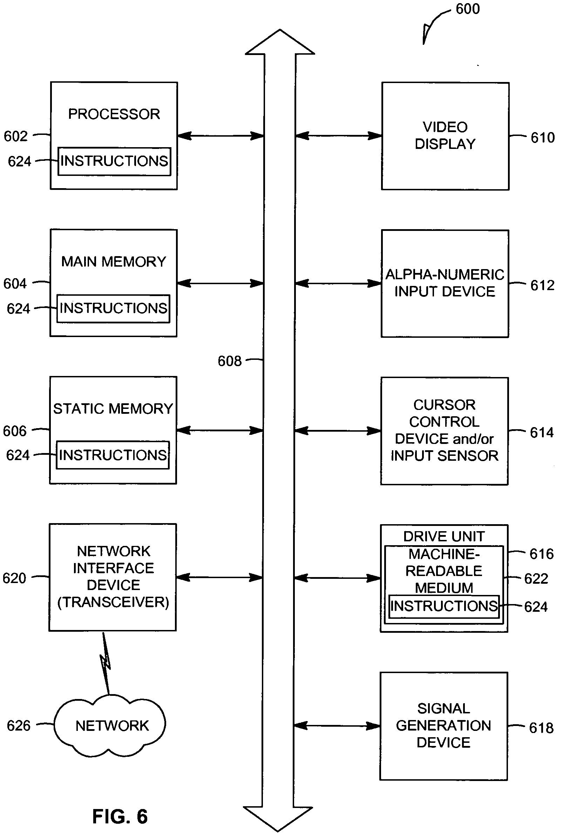

FIG. 6 shows a diagrammatic representation of a machine in the example form of a computer system 600 within which a set of instructions, for causing the machine to perform any one or more of the methodologies discussed herein, may be executed. The computer system 600 can comprise, for example, any of the mobile devices 102, device 116, server 108, and/or server 112. In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a server computer, a client computer, a personal computer (PC), a tablet PC, a set-top box (STB), a Personal Digital Assistant (PDA), a cellular telephone, a web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 600 includes a processor 602 (e.g., a central processing unit (CPU), a graphics processing unit (GPU), or both), a main memory 604 and a static memory 606, which communicate with each other via a bus 608. The computer system 600 may further include a video display unit 610 (e.g., liquid crystal display (LCD), organic light emitting diode (OLED) display, touch screen, or a cathode ray tube (CRT)). The computer system 600 also includes an alphanumeric input device 612 (e.g., a keyboard, a physical keyboard, a virtual keyboard using software), a cursor control device or input sensor 614 (e.g., a mouse, a trackpad, a trackball, a sensor or reader, a machine readable information reader, bar code reader), a disk drive unit 616, a signal generation device 618 (e.g., a speaker) and a network interface device or transceiver 620.

The disk drive unit 616 includes a machine-readable medium 622 on which is stored one or more sets of instructions (e.g., software 624) embodying any one or more of the methodologies or functions described herein. The software 624 may also reside, completely or at least partially, within the main memory 604 and/or within the processor 602 during execution thereof by the computer system 600, the main memory 604 and the processor 602 also constituting machine-readable media.

The software 624 may further be transmitted or received over a network 626 via the network interface device 620.

While the machine-readable medium 622 is shown in an example embodiment to be a single medium, the term "machine-readable medium," "computer readable medium," and the like should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present invention. The term "machine-readable medium" shall accordingly be taken to include, but not be limited to, solid-state memories, optical and magnetic media, and carrier wave signals.

It will be appreciated that, for clarity purposes, the above description describes some embodiments with reference to different functional units or processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Certain embodiments described herein may be implemented as logic or a number of modules, engines, components, or mechanisms. A module, engine, logic, component, or mechanism (collectively referred to as a "module") may be a tangible unit capable of performing certain operations and configured or arranged in a certain manner. In certain example embodiments, one or more computer systems (e.g., a standalone, client, or server computer system) or one or more components of a computer system (e.g., a processor or a group of processors) may be configured by software (e.g., an application or application portion) or firmware (note that software and firmware can generally be used interchangeably herein as is known by a skilled artisan) as a module that operates to perform certain operations described herein.

In various embodiments, a module may be implemented mechanically or electronically. For example, a module may comprise dedicated circuitry or logic that is permanently configured (e.g., within a special-purpose processor, application specific integrated circuit (ASIC), or array) to perform certain operations. A module may also comprise programmable logic or circuitry (e.g., as encompassed within a general-purpose processor or other programmable processor) that is temporarily configured by software or firmware to perform certain operations. It will be appreciated that a decision to implement a module mechanically, in dedicated and permanently configured circuitry, or in temporarily configured circuitry (e.g., configured by software) may be driven by, for example, cost, time, energy-usage, and package size considerations.

Accordingly, the term "module" should be understood to encompass a tangible entity, be that an entity that is physically constructed, permanently configured (e.g., hardwired), or temporarily configured (e.g., programmed) to operate in a certain manner or to perform certain operations described herein. Considering embodiments in which modules or components are temporarily configured (e.g., programmed), each of the modules or components need not be configured or instantiated at any one instance in time. For example, where the modules or components comprise a general-purpose processor configured using software, the general-purpose processor may be configured as respective different modules at different times. Software may accordingly configure the processor to constitute a particular module at one instance of time and to constitute a different module at a different instance of time.

Modules can provide information to, and receive information from, other modules. Accordingly, the described modules may be regarded as being communicatively coupled. Where multiples of such modules exist contemporaneously, communications may be achieved through signal transmission (e.g., over appropriate circuits and buses) that connect the modules. In embodiments in which multiple modules are configured or instantiated at different times, communications between such modules may be achieved, for example, through the storage and retrieval of information in memory structures to which the multiple modules have access. For example, one module may perform an operation and store the output of that operation in a memory device to which it is communicatively coupled. A further module may then, at a later time, access the memory device to retrieve and process the stored output. Modules may also initiate communications with input or output devices and can operate on a resource (e.g., a collection of information).

Although the present invention has been described in connection with some embodiments, it is not intended to be limited to the specific form set forth herein. One skilled in the art would recognize that various features of the described embodiments may be combined in accordance with the invention. Moreover, it will be appreciated that various modifications and alterations may be made by those skilled in the art without departing from the scope of the invention.

The Abstract is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate embodiment.

## Claims

1. A mobile device (102, 116), comprising:
a processor (602) configured to determine user activity information based on a user interfacing with the mobile device;
a transceiver (620) configured to wirelessly transmit the user activity information to a remote server; and
a display (610), in response to receiving a streaming banner from the remote server, configured to present the streaming banner at a pre-determined portion of a home screen, wherein the streaming banner recommends at least one application that is selected based on the user activity information and data mining sources, wherein the data mining sources are determined based on user profiles that are similar to a user profile associated with the user of the mobile device, and wherein the processor is in communication with each of the transceiver and the display.

2. The mobile device (102, 116) of claim 1, wherein the selected application is identical to an application identified in a data mining source.

3. The mobile device (102, 116) of any one of claims 1-2, wherein the selected application is different from an application identified in the data mining source and the selected application shares at least one common trait with the application identified in the data mining source.

4. The mobile device (102, 116) of any one of claims 1-3, wherein the user activity information comprises one or more of a user using a first application, the user downloading a second application to the mobile device, a geo-location information, and the user specifying types of applications of interest.

5. The mobile device (102, 116) of any one of claims 1-4, wherein the home screen comprises an unlocked home screen.

6. The mobile device (102, 116) of any one of claims 1-5, wherein the home screen comprises a locked home screen.

7. The mobile device (102, 116) of any one of claims 1-6, further comprising an input sensor (610, 612, 614) configured to detect a user's interest in an actionable item corresponding to the selected application included in the streaming banner.

8. The mobile device of claim 7, wherein the display (610) is configured to display a page from an application e-commerce site in response to the detected user interest, the page from the application e-commerce site including one or more of a description of the selected application, a purchase interface for the selected application, and a download interface for the selected application.

9. A method (400) for recommending one or more applications on a mobile device, the method comprising:
determining (402) user activity information based on a user interfacing with the mobile device;
wirelessly transmitting (402), by the mobile device, the user activity information to a server; and
in response to receiving (404) a streaming banner from the server, displaying (404) the streaming banner at a pre-determined portion of a screen of the mobile device, wherein the streaming banner recommends one or more applications that targets the user based on the user activity information and data mining sources, wherein the data mining sources are determined based on user profiles that are similar to a user profile associated with the user of the first mobile device.

10. The method (400) of claim 9, wherein the displaying (404) of the streaming banner includes displaying in at least one of a locked home screen, an unlocked home screen, a mobile browser screen, or a second application screen.

11. The method (400) of any one of claims 9-10, wherein the displaying (404) of the streaming banner is persistent, periodic, for a set time period, or in response to a certain user activity.

12. The method (400) of any one of claims 9-11, wherein the streaming banner includes at least one of a graphic, text, hyperlink, icon, or actionable item corresponding to each of the one or more applications being recommended in the streaming banner.

13. A non-transitory computer readable medium (604, 606, 622) including instructions, when executed by a processor, causes the processor to perform operations comprising:
receiving (302) user activity information from mobile devices (102, 116);
detecting (304) a condition triggering a streaming banner to be provided to a first mobile device;
determining (306) data mining sources based on user profiles that are similar to a user profile associated with the user of the first mobile device;
in response to the detecting (304) of the condition, selecting (308) at least one application to promote in the streaming banner based on the user activity information and the data mining sources; and
transmitting (312) the streaming banner to the mobile device.

14. The non-transitory computer readable medium (604, 606, 622) of claim 13, wherein the condition comprises at least one of a geo-location, proximity of the mobile device to a retailer, proximity of the mobile device to a product, a user using a first application, the user downloading a second application, and the user specifying application preferences.

## Patentansprüche

1. Mobilvorrichtung (102, 116), aufweisend:
einen Prozessor (602), der dazu konfiguriert ist, Nutzeraktivitätsinformationen basierend darauf zu bestimmen, dass ein Nutzer mit der Mobilvorrichtung kommuniziert;
einen Sendeempfänger (620), der dazu konfiguriert ist, die Nutzeraktivitätsinformationen drahtlos an einen Remote-Server zu senden; und
eine Anzeige (610), die dazu konfiguriert ist, als Reaktion auf das Empfangen eines Streaming-Banners von dem Remote-Server, das Streaming-Banner an einem vorgegebenen Abschnitt eines Startbildschirms darzustellen, wobei das Streaming-Banner zumindest eine Anwendung empfiehlt, die basierend auf den Nutzeraktivitätsinformationen und Data-Mining-Quellen ausgewählt wird, wobei die Datei-Mining-Quellen basierend auf Nutzerprofilen bestimmt werden, die einem Nutzerprofil ähnlich sind, das mit dem Nutzer der Mobilvorrichtung assoziiert ist, und wobei der Prozessor jeweils mit dem Sendeempfänger und der Anzeige kommuniziert.

2. Mobilvorrichtung (102, 116) nach Anspruch 1, wobei die ausgewählte Anwendung identisch zu einer Anwendung ist, die in einer Data-Mining-Quelle identifiziert wurde.

3. Mobilvorrichtung (102, 116) nach einem der Ansprüche 1 bis 2, wobei die ausgewählte Anwendung sich von einer Anwendung unterscheidet, die in der Data-Mining-Quelle identifiziert wurde, und sich die ausgewählte Anwendung zumindest ein gemeinsames Merkmal mit der Anwendung teilt, die in der Data-Mining-Quelle identifiziert wurde.

4. Mobilvorrichtung (102, 116) nach einem der Ansprüche 1 bis 3, wobei die Nutzeraktivitätsinformationen einen oder mehrere der folgenden Punkte aufweisen: einen eine erste Anwendung verwendenden Nutzer, der Nutzer lädt eine zweite Anwendung auf die Mobilvorrichtung herunter, eine Geo-Location Information, und der Nutzer bestimmt Arten von Anwendungen von Interesse.

5. Mobilvorrichtung (102, 116) nach einem der Ansprüche 1 bis 4, wobei der Startbildschirm einen nicht-gesperrten Startbildschirm aufweist.

6. Mobilvorrichtung (102, 116) nach einem der Ansprüche 1 bis 5, wobei der Startbildschirm einen gesperrten Startbildschirm aufweist.

7. Mobilvorrichtung (102, 116) nach einem der Ansprüche 1 bis 6, ferner aufweisend einen Eingabesensor (610, 612, 614), der dazu konfiguriert ist, ein Nutzerinteresse an einem nachverfolgbaren Item entsprechend der ausgewählten Anwendung beinhaltet in dem Streaming-Banner zu detektieren.

8. Mobilvorrichtung nach Anspruch 7, wobei die Anzeige (610) dazu konfiguriert ist, eine Seite von einer Anwendungs-E-Commerce-Seite als Reaktion auf das detektierte Nutzerinteresse anzuzeigen, wobei die Seite von der Anwendungs-E-Commerce-Seite einen oder mehrere der folgenden Punkte beinhaltet: eine Beschreibung der ausgewählten Anmeldung, eine Kaufschnittstelle für die ausgewählte Anwendung, und eine Herunterladen-Schnittstelle für die ausgewählte Anwendung.

9. Verfahren (400) zum Empfehlen einer oder mehrerer Anwendungen einer Mobilvorrichtung, das Verfahren aufweisend:
Bestimmen (402) von Nutzeraktivitätsinformationen basierend darauf, dass ein Nutzer mit der Mobilvorrichtung kommuniziert;
drahtloses Senden (402), durch die Mobilvorrichtung, der Nutzeraktivitätsinformationen an einen Server; und
als Reaktion auf das Empfangen(404) eines Streaming-Banners von dem Server, das Anzeigen (404) des Streaming-Banners an einem vorgegebenen Abschnitt eines Bildschirms der Mobilvorrichtung, wobei das Streaming-Banner zumindest eine oder mehr Anwendungen empfiehlt, die basierend auf den Nutzeraktivitätsinformationen und Data-Mining-Quellen auf den Nutzer abzielen, wobei die Datei-Mining-Quellen basierend auf Nutzerprofilen bestimmt werden, die einem Nutzerprofil ähnlich sind, das mit dem Nutzer der ersten Mobilvorrichtung assoziiert ist.

10. Verfahren (400) nach Anspruch 9, wobei das Anzeigen (404) des Streaming-Banners das Anzeigen auf einem gesperrten Startbildschirm und/oder einem nicht-gesperrten Startbildschirm und/oder einem Mobil-Browser-Bildschirm und/oder einem zweiten Anwendungsbildschirm umfasst.

11. Verfahren (400) nach einem der Ansprüche 9 bis 10, wobei das Anzeigen (404) des Streaming-Banners persistent, periodisch, für eine festgelegte Zeitspanne, oder als Reaktion auf eine bestimmte Nutzeraktivität ist.

12. Verfahren (400) nach einem der Ansprüche 9 bis 11, wobei das Streaming-Banner eine Grafik und/oder Text und/oder einen Hyperlink und/oder ein Icon und/oder ein nachverfolgbares Icon entsprechend jeder der einen oder mehreren Anwendungen beinhaltet, die in dem Streaming-Banner empfohlen werden.

13. Nicht-flüchtiges, computerlesbares Medium (604, 606, 622) beinhaltend Anweisungen, die, wenn sie durch einen Prozessor ausgeführt werden, den Prozessor dazu veranlassen, Vorgänge durchzuführen, aufweisend:
Empfangen (302) von Nutzeraktivitätsinformationen von den Mobilvorrichtungen (102, 116),
Detektieren (304) eines Zustands, der das Bereitstellen eines Streaming-Banners an einer ersten Mobilvorrichtung auslöst;
Bestimmen (306) von Data-Mining-Quellen basierend auf Nutzerprofilen, die einem Nutzerprofil ähnlich sind, das mit dem Nutzer der ersten Mobilvorrichtung assoziiert ist;
als Reaktion auf das Detektieren (304) des Zustands, Auswählen (308) von zumindest einer Anwendung, die in dem Streaming-Banner beworben werden soll, basierend auf den Nutzeraktivitätsinformationen und den Data-Mining-Quellen; und
Übertragen (312) des Streaming-Banners an die Mobilvorrichtung.

14. Nicht-flüchtiges, computerlesbares Medium (604, 606, 622) nach Anspruch 13, wobei der Zustand eine Geo-Location und/oder die Nähe der Mobilvorrichtung zu einem Händler und/oder die Nähe der Mobilvorrichtung zu einem Produkt und/oder einen eine erste Anwendung verwendenden Nutzer und/oder der Nutzer lädt eine zweite Anwendung herunter und/oder der Nutzer gibt Anwendungspräferenzen an aufweist.

## Revendications

1. Dispositif mobile (102, 116), comprenant :
un processeur (602) configuré pour déterminer des informations d'activité d'utilisateurs sur la base d'un système d'interface utilisateur avec le dispositif mobile ;
un émetteur-récepteur (620) configuré pour transmettre sans fil les informations d'activité d'utilisateurs à un serveur distant ; et
un afficheur (610), configuré, en réponse à la réception d'une bannière de diffusion en flux provenant du serveur distant, pour présenter la bannière de diffusion en flux sur une partie prédéterminée d'un écran d'accueil, dans lequel la bannière de diffusion en flux recommande au moins une application qui est sélectionnée sur la base des informations d'activité d'utilisateurs et de sources d'exploration de données, dans lequel les sources d'exploration de données sont déterminées sur la base de profils d'utilisateurs qui sont semblables à un profil d'utilisateur associé à l'utilisateur du dispositif mobile, et dans lequel le processeur est en communication avec chacun de l'émetteur-récepteur et de l'afficheur.

2. Dispositif mobile (102, 116) selon la revendication 1, dans lequel l'application sélectionnée est identique à une application identifiée dans une source d'exploration de données.

3. Dispositif mobile (102, 116) selon l'une quelconque des revendications 1-2, dans lequel l'application sélectionnée est différente d'une application identifiée dans la source d'exploration de données et dans lequel l'application sélectionnée partage au moins un trait commun avec l'application identifiée dans la source d'exploration de données.

4. Dispositif mobile (102, 116) selon l'une quelconque des revendications 1-3, dans lequel les informations d'activité d'utilisateurs comprennent un ou plusieurs d'une utilisation par un utilisateur d'une première application, du téléchargement par l'utilisateur d'une seconde application sur le dispositif mobile, d'informations de géolocalisation et de spécifications par l'utilisateur de types d'applications d'intérêt.

5. Dispositif mobile (102, 116) selon l'une quelconque des revendications 1-4, dans lequel l'écran d'accueil comprend un écran d'accueil déverrouillé.

6. Dispositif mobile (102, 116) selon l'une quelconque des revendications 1-5, dans lequel l'écran d'accueil comprend un écran d'accueil verrouillé.

7. Dispositif mobile (102, 116) selon l'une quelconque des revendications 1-6, comprenant en outre un capteur d'entrée (610, 612, 614) configuré pour détecter l'intérêt porté par un utilisateur sur un élément sur lequel une action peut être effectuée correspondant à l'application sélectionnée contenue dans la bannière de diffusion en flux.

8. Dispositif mobile selon la revendication 7, dans lequel l'afficheur (610) est configuré pour afficher une page provenant d'un site de commerce électronique d'applications en réponse à l'intérêt détecté de l'utilisateur, la page provenant du site de commerce électronique d'applications contenant une ou plusieurs d'une description de l'application sélectionnée, d'une interface d'achat concernant l'application sélectionnée, et d'une interface de téléchargement pour l'application sélectionnée.

9. Procédé (400) destiné à recommander une ou plusieurs applications sur un dispositif mobile, le procédé consistant à :
déterminer (402) des informations d'activité d'utilisateurs basées sur un système d'interface utilisateur avec le dispositif mobile ;
transmettre sans fil (402), par le dispositif mobile, les informations d'activité d'utilisateurs à un serveur; et
en réponse à la réception (404) d'une bannière de diffusion en flux en provenance du serveur, afficher (404) la bannière de diffusion en flux sur une partie prédéterminée d'un écran du dispositif mobile, dans lequel la bannière de diffusion en flux recommande une ou plusieurs applications qui ciblent l'utilisateur sur la base des informations d'activité d'utilisateurs et de sources d'exploration de données, dans lequel les sources d'exploration de données sont déterminées sur la base de profils d'utilisateurs qui sont semblables à un profil d'utilisateur associé à l'utilisateur du premier dispositif mobile.

10. Procédé (400) selon la revendication 9, dans lequel l'affichage (404) de la bannière de diffusion en flux consiste à effectuer un affichage sur au moins l'un d'un écran d'accueil verrouillé, d'un écran d'accueil déverrouillé, d'un écran de navigateur mobile ou d'un second écran d'application.

11. Procédé (400) selon l'une quelconque des revendications 9-10, dans lequel l'affichage (404) de la bannière de diffusion en flux est persistant, périodique, d'une durée définie ou effectué en réponse à une certaine activité d'utilisateur.

12. Procédé (400) selon l'une quelconque des revendications 9-11, dans lequel la bannière de diffusion en flux comporte au moins l'un d'un graphique, d'un texte, d'un hyperlien, d'une icône ou d'un élément sur lequel une action peut être effectuée correspondant à chacune desdites une ou plusieurs applications recommandées dans la bannière de diffusion en flux.

13. Support lisible par ordinateur non transitoire (604, 606, 622) comportant des instructions qui, lorsqu'elles sont exécutées par un processeur, font en sorte que le processeur mette en oeuvre des opérations consistant à :
recevoir (302) des informations d'activité d'utilisateurs en provenance de dispositifs mobiles (102, 116) ;
détecter (304) une condition déclenchant une bannière de diffusion en flux devant être fournie à un premier dispositif mobile ;
déterminer (306) des sources d'exploration de données sur la base de profils d'utilisateurs qui sont semblables à un profil d'utilisateur associé à l'utilisateur du premier dispositif mobile ;
en réponse à la détection (304) de la condition, sélectionner (308) au moins une application devant être promue dans la bannière de diffusion en flux sur la base des informations d'activité d'utilisateurs et des sources d'exploration de données ; et
transmettre (312) la bannière de diffusion en flux au dispositif mobile.

14. Support lisible par ordinateur non transitoire (604, 606, 622) selon la revendication 13, dans lequel la condition comprend au moins l'une d'une géolocalisation, d'une proximité du dispositif mobile par rapport à un commerçant, d'une proximité du dispositif mobile par rapport à un produit, d'une utilisation par l'utilisateur d'une première application, d'un téléchargement par l'utilisateur d'une seconde application et d'une spécification par l'utilisateur de préférences d'applications.
